(19) Europäisches Patentamt

European Patent Office

Office européen des brevets

(11) **EP 1 650 423 A1**

(12) **EUROPÄISCHE PATENTANMELDUNG**

(43) Veröffentlichungstag:
26.04.2006 Patentblatt 2006/17

(51) Int Cl.:
*F02M 25/00* (2006.01)

(21) Anmeldenummer: 04105165.7

(22) Anmeldetag: **20.10.2004**

(84) Benannte Vertragsstaaten:
AT BE BG CH CY CZ DE DK EE ES FI FR GB GR
HU IE IT LI LU MC NL PL PT RO SE SI SK TR
Benannte Erstreckungsstaaten:
AL HR LT LV MK

(71) Anmelder: **Ford Global Technologies, LLC, A subsidary of Ford Motor Company**
**Dearborn, MI 48126 (US)**

(72) Erfinder: **Paffrath, Holger**
**50259 Pulheim (DE)**

(74) Vertreter: **Drömer, Hans-Carsten et al**
**Ford-Werke Aktiengesellschaft,**
**Patentabteilung NH/DRP,**
**Henry-Ford-Strasse 1**
**50725 Köln (DE)**

(54) **Additivdosierungsverfahren**

(57) Die Erfindung betrifft ein Verfahren zur dosierten Zuführung eines Additivs in einen Kraftstofftank eines Kraftfahrzeuges mit einem Partikelfilter. Eine notwendige Additivdosierung wird in aufeinanderfolgenden Intervallen determiniert. Die jeweiligen Intervalle sind derart bemessen sind, daß diese jeweils kürzer als eine normale Fahrstrecke des Kraftfahrzeuges zwischen zwei aufeinanderfolgen Regenerationszyklen des Partikelfilters und jeweils kürzer als eine normale Tankperiode zum Auftanken des Kraftfahrzeugtanks sind.

Fig. 1

EP 1 650 423 A1

**Beschreibung**

Die Erfindung betrifft ein Verfahren zur Dosierung von Additiven in einem Kraftstofftank eines Kraftfahrzeuges mit einem Partikelfilter.

In der EP 0 661 429 B1 wird ein Verfahren zum automatischen Einführen eines Zusatzstoffes in dosierten Mengen in den Kraftstoff eines selbstzündenden Motors für ein Kraftfahrzeug offenbart, um die Konzentration des Zusatzstoffes in dem Kraftstoff auf einem Sollwert zu halten. Im Laufe der Zeit wird der Sollwert als Funktion wenigstens eines Parameters geändert, der für den Gebrauch des Fahrzeuges seit dem Datum der Inbetriebnahme des Fahrzeuges oder eines Teilchenfilters, der in der Auslaßleitung des Motors angeordnet ist, repräsentativ ist. Der Sollwert wird auf einen ersten Wert, solange der Parameter, der für den Gebrauch des Fahrzeuges repräsentativ ist, einen Schwellenwert nicht überschreitet, dann auf einen zweiten Wert, der geringer ist als der erste Wert, wenn der Parameter den Schwellenwert überschritten hat, festgelegt, um die Menge an Zusatzstoffen zu begrenzen, die in den Kraftstoff eingegeben wird, und um die Bedingungen für das Arbeiten des Teilchenfilters zu verbessern.

Das Verfahren beinhaltet einen Schritt a) zum Messen des Anfangsstandes an Kraftstoff in dem Kraftstoffbehälter, vor jeder Nachtankoperation des Kraftstoffbehälters mit Kraftstoff, einen Schritt b) zum Messen des Endstandes an Kraftstoff in dem Kraftstoffbehälter bei dem Beenden jeder der Nachtankoperationen und einen Schritt c) zum Bestimmen der Kraftstoffmenge, die in dem Kraftstoffbehälter während jeder der Nachtankoperationen eingefüllt worden ist, ausgehend von dem Anfangsstand und dem Endstand, die gemessen worden sind. Vor dem Schritt a) wird die kumulierte Menge an Kraftstoff und die kumulierte Menge an Zusatzstoff, die in den Kraftstoff seit der Inbetriebnahme des Fahrzeuges eingespritzt worden ist, ebenso wie eine Menge an Gasöl, die den Schwellenwert bildet, bei dem man den Sollwert der Konzentration an Zusatzstoff in das Gasöl des Kraftstoffbehälters übergehen läßt, gespeichert. Nach dem Schritt c) wird die Menge an zugesetztem Kraftstoff, die in dem Schritt c) bestimmt worden ist, zu der des Kraftstoffes addiert, um einen neuen Wert zu erhalten, wobei ebenfalls der Sollwert der Konzentration an Zusatzstoff in dem Kraftstoff des Kraftstoffbehälters bestimmt wird, ebenso wie die Menge an Zusatzstoff, die notwendig ist, um diesen Sollwert zu erhalten. Nach dem Schritt c) wird aber auch in den Kraftstoffbehälter des Fahrzeuges die vorangehend bestimmte Menge an Zusatzstoff in automatischer Weise eingespritzt, und zwar über eine Leitung, die den Behälter mit dem Förderteil einer Einspritzpumpe für Kraftstoff in dem Motor verbindet.

Damit soll in der EP 0 661 429 B1 erreicht werden, daß ab einem Zeitpunkt, der durch ein Modul festgestellt wird, Zusatzeinspritzungen vermindert werden. Dies soll notwendig sein, da im Laufe der Zeit die metallischen Oxide, die in dem Teilchenfilter enthalten sind, eine Aktivität beibehalten, so daß die Dosierung an Zusatzstoff in dem Kraftstoff des Behälters verringert werden kann.

Bekannt ist aber auch, daß das Additiv nach jedem Nachtanken abhängig von der nachgetankten Kraftstoffmenge dosiert zugegeben wird. Hierbei ist das Verhältnis von Additiv zum Kraftstoff, die Dosierrate, konstant. Mit diesem Verfahren muß die Dosierrate derart ausgewählt werden, daß auch der "worst-case"-Fall abgedeckt ist. Hierzu muß bezogen auf die Regenerationsfähigkeit eine Mindestabgastemperatur, ein Mindestsauerstoffgehalt und damit eine Mindestmenge an Additiv vorgesehen werden. Daher ist die Dosierrate höher und ein Inspektionsintervall des Partikelfilters geringer als erforderlich. Jede Inspektion des Partikelfilters ist sehr Zeit- und Kostenintensiv, und wirkt sich nachteilig auf die Zufriedenheit des Kraftfahrzeugbenutzers aus.

Der Erfindung liegt die Aufgabe zugrunde, ein Verfahren der eingangs genannten Art dahin gehend zu verbessern, daß mit einfachen Mitteln eine Verlängerung des Inspektionsintervalls für den Partikelfilter erreicht wird, wobei die Lebensdauer des Partikelfilters erheblich verlängert wird.

Erfindungsgemäß wird die Aufgabe dadurch gelöst, daß eine notwendige Additivdosierung in aufeinander folgenden Intervallen determiniert wird, wobei die jeweiligen Intervalle derart bemessen sind, daß diese jeweils kürzer als eine normale Fahrstrecke des Kraftfahrzeuges zwischen zwei aufeinander folgenden Regenerationszyklen des Partikelfilters und jeweils kürzer als eine normale Tankperiode zum Auftanken des Kraftfahrzeugtankes sind.

Durch die vorgegebenen Intervalle wird erreicht, daß sich die jeweilige Dosiermenge des Additivs an jeweils wechselnde Betriebsbedingungen bevorzugt selbst anpaßt, und damit vorteilhaft in dem jeweiligen Intervall bezogen auf ein vorhergehendes Intervall veränderbar ist. Vorteilhafterweise wird die Menge des Additivs, die dem Kraftstoff dosiert zugeführt wird, in einem Regelkreis (closed-loop) gesteuert. Die Dosierrate muß nicht für worst-case-Bedingungen ausgewählt werden, so daß das Inspektionsintervall des Partikelfilters verlängert werden kann.

Selbstverständlich entspricht ein Anfang eines neuen Intervalls einem Ende eines vorhergehenden Intervalls.

Das Ende eines Intervalls ist zweckmäßigerweise erreicht, wenn entweder eine maximale Länge des Intervalls erreicht ist, oder wenn der Kraftstofftank betankt wird. Günstig im Sinne der Erfindung ist hierbei, wenn die maximale Länge eines jeweiligen Intervalls eine vorgegebene, statisch fixierte Fahrstrecke ist, wobei die maximale Länge eines jeweiligen Intervalls aber auch innerhalb von gegebenen Grenzen variieren kann, welche von einem Fahrstil eines Kraftfahrzeugführers abhängig ist. Eine angemessene Intervalllänge kann zum Beispiel auf eine maximale Länge von 150 km festgelegt werden, wobei die Erfindung auf diesen Wert selbstverständlich nicht beschränkt sein soll, so daß auch kürzere oder längere Wegstrecken denkbar sind.

Zweckmäßigerweise wird ein Kraftstoffverbrauch und eine Rußmasse in dem Partikelfilter aufgenommen. Wenn ein Durchschnittsverhältnis der Rußmasse zum Kraftstoffverbrauch in dem betreffenden Intervall anzeigt, daß mehr Additiv notwendig ist, wird eine zusätzliche Additivmenge am Anfang des nächstfolgenden Intervalls in den Kraftstoffbehälter eingespritzt, wobei, wenn festgestellt wird, daß weniger Additiv notwendig ist, dies bei dem nächsten Tankprozeß entsprechend beachtet wird.

Der Kraftstoffverbrauch ist eine Information, die über ein Motorsteuersystem erhältlich ist. Die Rußmasse in dem Partikelfilter ist über eine Partikelfilter-Regenerationsüberwachung erhältlich. Anstelle der Rußmasse ist ein Rußmassenindikator denkbar, welcher beispielsweise einen Partikelfilterstatus von 0 bis 100 % anzeigt, wobei das Verfahren natürlich entsprechend angepaßt werden kann.

Bevorzugterweise wird das Verfahren bei Dieselmotoren angewandt, welche als Partikelfilter einen Dieselpartikelfilter in einem Abgasstrang aufweisen.

Günstig ist, wenn das Verfahren bei jedem Anfang eines Intervalls in mehreren Schritten durchgeführt wird.

In einem ersten Schritt wird eine gesamte Kraftstoffmenge in dem Kraftstofftank an einem Ende eines vorhergehenden Intervalls bestimmt. Dies kann vor oder nach dem Nachtanken durchgeführt werden. Die Kraftstoffmenge in dem Tank an dem Ende des vorhergehenden Intervalls (Intervall n-1) vor dem Nachtanken ($FM_{n-1, br}$) wird durch einen Kraftstoffstandsensor bestimmt und in dem Fahrzeugsteuergerät berechnet. Die Kraftstoffmenge in dem Tank nach dem Tankprozeß ($FM_{n-1, ar}$) wird in derselben Art und Weise berechnet bzw. bestimmt.

In einem zweiten Schritt wird die Dosierrate in dem vorhergehenden Intervall vorherbestimmt, wobei in einem dritten Schritt eine gesamte Additivmenge in dem Kraftstofftank an dem Ende des vorhergehenden Intervalls bestimmt wird. Die gesamte Additivmenge in dem Tank an dem Ende des vorhergehenden Intervalls ($AM_{n-1}$) wird erhalten, indem die Kraftstoffmenge ($FM_{n-1, br}$) und die Dosierrate an dem Anfang des vorhergehenden Intervalls (n-1) ($DR_{n-1}$) verwendet wird. Die Dosierrate wird bei jedem Anfang eines jeweiligen Intervalls vorherbestimmt, wobei $DR_{n-1}$ aus der Berechnung des Anfangs des vorhergehenden Intervalls n-1 genommen wird. Die Additivmenge wird mit folgender Gleichung bestimmt:

$$AM_{n-1}[kg] = \frac{DR_{n-1}[ppm]}{1E6} \cdot FM_{n-1,br}[kg] \qquad (1)$$

In einem vierten Schritt wird die notwendige Dosierrate in dem vorhergehenden Intervall bestimmt. Die notwendige Dosierrate in dem vorhergehenden Intervall n-1 ($DR_{n-1, required}$) wird bestimmt, indem eine Rußmengenemission und der Kraftstoffverbrauch in dem vorhergehenden Intervall n-1 verwendet wird. Die Gleichung hierzu ist:

$$DR_{n-1,required}[ppm] = \frac{k}{FuelDensity[g/cm^3]} \cdot \left( \frac{IOF[g/km]}{FuelConsumption[L/100km]} \right) \qquad (2)$$

Darin ist k eine anwendungsspezifische Konstante, deren Wert für jede Anwendung einmalig angepaßt werden muß.

Die zusätzliche Menge von unlösbaren organischen Bestandteilen (IOF) in dem vorhergehenden Intervall ist der Partikelfilter-Regenerationsüberwachung entnehmbar. Die Überwachung mißt jeweils eine kumulative Rußmasse in dem Partikelfilter, um zu bestimmen, wann eine nächstfolgende Regeneration durchzuführen ist. Es sei noch einmal darauf hingewiesen, daß der Kraftstoffverbrauch aus dem Steuergerät erhältlich ist.

In einem fünften Schritt wird eine Zieldosierrate in dem derzeitigen Intervall bestimmt. Die Zieldosierrate ($DR_{n, target}$) in dem derzeitigen Intervall n kann die Dosierrate sein, die mit Nenn-Rußemissionen und Nenn-Kraftstoffverbräuchen gleich ist. Hierbei ist anzumerken, daß im Stand der Technik ein Dosierverfahren mit konstanten Dosierraten verwendet wird, wobei die Dosierrate basierend auf Annahmen vorherbestimmt wird. Die Zieldosierrate kann von diesem Wert abweichen, wenn eine "selbstlernende Strategie" verwendet wird. Die bisherige Abweichung der Zieldosierrate zur notwendigen Dosierrate kann für diese selbstlernende Strategie verwendet werden. Die erste Annahme ist derart, daß $DR_{n, target}$ ein konstanter Wert ist.

In einem sechsten Schritt wird eine Anzahl von Additivpumpen-Einspritzhüben an dem Beginn des derzeitigen Intervalls bestimmt. Die Anzahl der Einspritzhübe ($IS_n$) einer Additivdosierpumpe bei dem Start des derzeitigen Intervalls n ist proportional zu der zusätzlichen Masse des Additivs ($IAM_n$), die bei dem Start des derzeitigen Intervalls n eingespritzt werden muß. Die zusätzliche Additivmenge wird vorherbestimmt durch die Additivmenge in dem Kraftstofftank $AM_{n-1}$ und der Kraftstoffmenge in dem Kraftstofftank an dem Ende des vorhergehenden Intervalls n-1 $FM_{n-1, ar}$ und durch die Zieldosierrate DR$_{n, target}$.

$$\text{Re}\, quiredAdditiveMass[kg] = \max\!\left(\!\left(FM_{n-1,ar}[kg] \cdot \frac{DR_{n,t\,arg\,et}[ppm]}{1E6} - AM_{n-1}[kg]\right)\!; 0\right) \qquad (3)$$

$$IS_n = \frac{\text{Re}\, quiredAdditiveMass[kg] / AdditiveDensity[kg/m^3]}{PumpDisplacement[m^3]} \qquad (4)$$

$$IAM_n[kg] = \text{int}(IS_n) \cdot PumpDispla\, cement[m^3] \cdot AdditiveDe\, nsity[kg/m^3] \qquad (5)$$

In einem siebten Schritt wird eine Dosierrate in dem Tank an dem Anfang des derzeitigen Intervalls bestimmt. Da die Spritzpumpe keine Teilhübe oder negative Hübe ausführen kann, kann die aktuelle Dosierrate von der Zieldosierrate abweichen. Daher muß die aktuelle Dosierrate bei dem Beginn des derzeitigen Intervalls n (**DR$_n$**) bestimmt werden.

$$DR_n[ppm] = \frac{AM_{n-1} + IAM_n}{FM_{n-1,ar}} \cdot 1E6 \qquad (6)$$

In einem achten Schritt wird eine eingespritzte Menge des Additivs bestimmt. Um die Additivmenge in dem Additivtank zu bestimmen, wird ein kumulativer Additivverbrauch bestimmt.

$$AdditiveMass\, Used[kg] = \sum_{i=1}^{n} IAM_i \qquad (7)$$

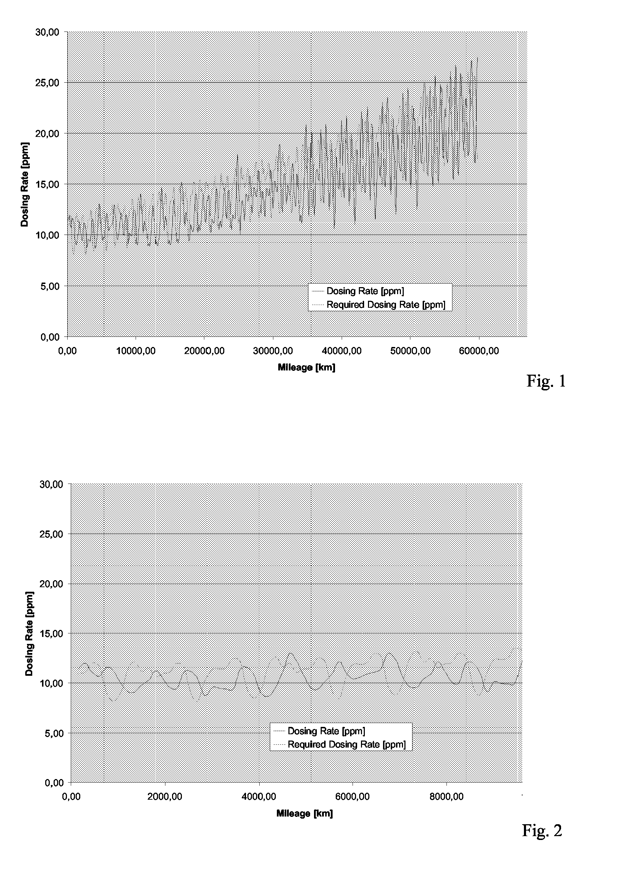

In den Figuren 1 und 2 sind die notwendigen und die aktuelle Dosierrate für einen zufälligen Kraftstoffverbrauch und Rußemission dargestellt. Die Rußemission steigt gegenüber der Zeit, um eine Art Drift zu simulieren. In Figur 2 ist erkennbar, daß die Dosierrate den Anforderungen nicht perfekt entspricht. In diesem Beispiel mit mehrmaligen Wechseln der Rußemission und des Kraftstoffverbrauches ist immer ein Unterschied zwischen der Dosierrate und den Anforderungen zu erkennen. Dieser Unterschied ist nicht größer, als wenn dieser mit einer konstanten Dosierrate verglichen wird.

In Figur 1 dagegen ist deutlich zu sehen, daß mit dem erfindungsgemäßen Verfahren ein Dosierverfahren zur Verfügung gestellt wird, welches sich selbst an wechselnde Betriebsbedingungen anpaßt. Diese Möglichkeit verlängert ein Inspektionsintervall des Partikelfilters, insbesondere des Dieselpartikelfilters, verglichen mit Fällen in denen die Nenn-Dosierrate entsprechend eines worst-case ausgewählt ist.

Es ist anzumerken, daß Additiv im Sinne der Erfindung eine Flüssigkeit mit darin enthaltenen aktiven Metallen ist, welche in einem Additivtank eingefüllt ist. Es ist nicht das aktive Metall selbst. Die Dosierrate ist im Sinne der Erfindung das Verhältnis des Additivs zum Kraftstoff in dem Kraftstofftank. Die Dosierrate wird in ppm/mass angegeben.

**Patentansprüche**

1. Verfahren zur Dosierten Zuführung eines Additivs in einen Kraftstofftank eines Kraftfahrzeuges mit einem Partikelfilter,
**dadurch gekennzeichnet, daß**
eine notwendige Additivdosierung, die Dosierrate, in aufeinanderfolgenden Intervallen determiniert wird, wobei die jeweiligen Intervalle derart bemessen sind, daß diese jeweils kürzer als eine normale Fahrstrecke des Kraftfahrzeuges zwischen zwei aufeinanderfolgen Regenerationszyklen des Partikelfilters und jeweils kürzer als eine normale Tankperiode zum Auftanken des Kraftfahrzeugtanks sind.

**2.** Verfahren nach Anspruch 1,
**dadurch gekennzeichnet, daß**
die Dosierrate für das jeweilige Intervall veränderbar ist.

**3.** Verfahren nach Anspruch 1 oder 2,
**dadurch gekennzeichnet, daß**
ein Ende eines Intervalls erreicht ist, wenn eine maximale Länge des Intervalls erreicht ist.

**4.** Verfahren nach einem der vorhergehenden Ansprüche,
**dadurch gekennzeichnet, daß**
ein Ende eines Intervalls erreicht ist, wenn der Kraftstofftank betankt wird.

**5.** Verfahren nach einem der vorhergehenden Ansprüchen,
**dadurch gekennzeichnet, daß**
eine maximale Länge eines jeweiligen Intervalls eine vorgegebene, statisch fixierte Fahrstrecke ist.

**6.** Verfahren nach einem der vorhergehenden Ansprüche,
**dadurch gekennzeichnet, daß**
eine maximale Länge eines jeweiligen Intervalls innerhalb von gegebenen Grenzen variiert, welche von einem Fahrstil eines Kraftfahrzeugführers abhängig ist.

**7.** Verfahren nach einem der vorhergehenden Ansprüche,
**dadurch gekennzeichnet, daß**
ein Kraftstoffverbrauch und eine Rußmaße in dem Partikelfilter aufgenommen wird, wobei eine zusätzliche Additivmenge an einem Anfang eines nächstfolgenden Intervalls in den Kraftstoffbehälter eingespritzt wird, wenn ein Durchschnittsverhältnis der Rußmaße zum Kraftstoffverbrauch in dem betreffenden Intervall anzeigt, daß mehr Additiv notwendig ist.

**8.** Verfahren nach einem der vorhergehenden Ansprüche, das an dem Anfang eines jeweiligen Intervalls folgende Schritte umfaßt:

- Determinierung einer gesamten Kraftstoffmenge in dem Kraftstofftank an einem Ende eines vorhergehenden Intervalls,
- Determinierung einer Dosierrate in dem vorhergehenden Intervall,
- Determinierung einer gesamten Additivmenge in dem Kraftstofftank an dem Ende des vorhergehenden Intervalls,
- Determinierung einer notwendigen Dosierrate in dem vorhergehenden Intervall,
- Determinierung einer Zieldosierrate in dem derzeitigen Intervall,
- Determinierung einer Anzahl von Additivpumpen-Einspritzhüben an dem Beginn des derzeitigen Intervalls,
- Determinierung einer Dosierrate in dem Kraftstofftank an dem Anfang des derzeitigen Intervalls,
- Determinierung einer eingespritzten Additivmenge.

Fig. 1

Fig. 2

**Europäisches Patentamt**

**EUROPÄISCHER RECHERCHENBERICHT**

Nummer der Anmeldung

EP 04 10 5165

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | JP 62 038816 A (TOYOTA MOTOR CORP) 19. Februar 1987 (1987-02-19) * Zusammenfassung; Abbildung 1 * ----- | 1-3,5,7, 8 | F02M25/00 |
| X | FR 2 668 203 A (PEUGEOT AUTOMOBILES; CITROEN; PEUGEOT; CITROEN SA) 24. April 1992 (1992-04-24) * Seite 5, Zeile 32 - Seite 10, Zeile 36; Abbildung 1 * ----- | 1,4 | |
| X | US 6 068 672 A (WATSON ET AL) 30. Mai 2000 (2000-05-30) * Spalte 2, Zeile 64 - Spalte 6, Zeile 51; Abbildungen 1,2 * ----- | 1,4 | |
| X | EP 0 488 831 A (AUTOMOBILES PEUGEOT; AUTOMOBILES CITROEN) 3. Juni 1992 (1992-06-03) * Seite 5, Zeile 4 - Seite 7, Zeile 1; Abbildungen 2,3 * ----- | 1 | |
| X | DE 37 15 388 A1 (WINKLER,RAIMUND) 24. November 1988 (1988-11-24) * das ganze Dokument * ----- | 1 | **RECHERCHIERTE SACHGEBIETE (Int.Cl.7)** F02M F02D |

Der vorliegende Recherchenbericht wurde für alle Patentansprüche erstellt

| Recherchenort | Abschlußdatum der Recherche | Prüfer |
|---|---|---|
| München | 8. März 2005 | Marsano, F |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                    EP 04 10 5165

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-03-2005

| Im Recherchenbericht angeführtes Patentdokument | Datum der Veröffentlichung | Mitglied(er) der Patentfamilie | | Datum der Veröffentlichung |
|---|---|---|---|---|
| JP 62038816 A | 19-02-1987 | KEINE | | |
| FR 2668203 A | 24-04-1992 | FR | 2668203 A1 | 24-04-1992 |
| US 6068672 A | 30-05-2000 | DE | 19805311 A1 | 20-08-1998 |
| | | FR | 2759737 A1 | 21-08-1998 |
| EP 0488831 A | 03-06-1992 | FR | 2669967 A1 | 05-06-1992 |
| | | DE | 69101696 D1 | 19-05-1994 |
| | | DE | 69101696 T2 | 04-08-1994 |
| | | EP | 0488831 A1 | 03-06-1992 |
| DE 3715388 A1 | 24-11-1988 | KEINE | | |

EPO FORM P0461

Für nähere Einzelheiten zu diesem Anhang : siehe Amtsblatt des Europäischen Patentamts, Nr.12/82